# EUROPEAN PATENT APPLICATION

(11) **EP 0 679 889 A2**
(43) Date of publication of application: **02.11.1995**
(21) Application number: 95105963.3
(22) Date of filing: 21.04.1995
(51) Int. Cl.: G01N 33/483, G01N 15/14

(54) **A method and an apparatus for particle image analysis**

(30) Priority: 25.04.1994 JP 86104/94
(71) Applicant: HITACHI, LTD., Chiyoda-ku, Tokyo 100 (JP)
(72) Inventor: Horiuchi, Hideyuki, Abiko-shi (JP); Asai, Hideki, Mito-shi (JP)
(74) Representative: Altenburg, Udo, Dipl.-Phys.

(57) **Abstract**

A method and an apparatus for particle image analysis used for improving an accuracy of particle classification. A liquid sample, in which particles are suspended, is made flow through a flow cell (100), surrounded by a cleaning solution. These are irradiated with light to image the particles therein by means of imaging unit (101). In classifying the particles by analyzing a picked up image, there are a plurality of modes, for each of which particles in the liquid sample are determined as an object to be measured. Further there is disposed particle detection unit (103) on the upstream side of an image pickup region (90) in the flow cell, which distinguishes signals of a plurality of kinds of particles, starting from particle detection signals thus obtained, to perform particle detection and image processing on specified particles distinguished for the different modes. In one of the plurality of modes particles of low concentration in the liquid sample are to be measured, while in another mode particles of high concentration are to be measured.

## Description

### BACKGROUND OF THE INVENTION

The present invention relates to a particle image analysis method and an apparatus for realizing same, particularly adequate to the classification of cells and particles contained in blood and urine.

Classification and analysis of blood cells or cells and particles existing in urine (hereinbelow called simply particles) are effected heretofore by observing a specimen prepared on a slide glass by means of a microscope. At analyzing urine, since the concentration of particles in urine is low, a sample is observed after having been previously condensed by means of a centrifugal separator. In an apparatus for performing automatically work of this observation and inspection, a slide glass, on which a sample of blood, etc. is applied, is set on a microscope; a microscope stage is moved automatically and stopped at a position, where existence of particles has been detected; a still image of particles is picked up; and classification of particles existing in the sample is effected by using feature extraction based on image processing techniques and by a pattern recognition method using a image thus picked up.

However much time is necessary for preparing a specimen by this method. Further it is necessary to move the microscope stage so that particles to be analyzed are in a field of view. Therefore analysis takes much time and the construction of the stage is complicated.

In a flow type particle image analysis apparatus disclosed in JP-A-57(kohyo)-500995, JP-A-63-94156, JP-A-4-72544, etc., a flow cell, in which sheath solution acting as cleaning solution constitutes an outer layer and a liquid sample forms an extremely thin and flat flow, is used in order to improve inspection accuracy and to save labor.

In this flow type particle image analysis apparatus the liquid sample moving in the flow cell is imaged by means of a video camera. Classification of particles in the liquid sample is effected by analyzing an image picked up by the video camera.

In particle image analysis apparatuses described in JP-A-3-105235 and JP-A-4-309841 imaging magnification factor is variable.

There are known further flow type particle image analysis apparatuses, in which particles are detected by a particle detection system located on the upstream side of a position, where the particle image of the liquid sample is picked up, and the flow cell is illuminated by pulsed light with suitable timing in order to pick up a particle still image, which are disclosed e.g. JP-A-63-94156 and JP-A-4-72545. By this method particles in the liquid sample can be processed with a high efficiency and therefore measurement precision for classification and counting of particles in the liquid sample can be improved.

However, the particle image analysis apparatus having the particle detecting system separately on the upstream side of the image pickup region has following problems, in case where there exist a plurality of kinds of particles in the liquid samples to be measured and also in case where concentration differs significantly for different particles.

Under a particle detection condition that particle detection level is set at a low value so that all the particles passing through the flow cell are detected, a great part of detected particles, whose image is to be processed, is composed only by the kind of particles, whose concentration is the highest, and other kinds of particles, whose densities are lower, are almost not detected. When densities of all the kinds of particles are sufficiently low, all the particle are detected and therefore there is no problem. However, although existence ratio of the different kinds of particles can be known, it is not possible to know exact numbers of different kinds of particles by using image-processed particles, because of dead time described below.

Since image signals picked up by means of a CCD TV camera picking up generally a still image are read out in a period of time corresponding to two fields, there exists a so-called dead time, during which no succeeding particle image can be picked up at reading.

If the flow cell is illuminated by the pulsed light when a particle passes through the particle detecting system during this dead time, this causes a multiple exposure and thus no normal image can be picked up. This influence becomes stronger with increasing particle concentration.

Further there are often cases where a kind of particles, whose concentration is low, gives information extremely important for particle analysis. Specifically, when analysing a sample which includes only one particle, the miscounting is a serious problem.

Furthermore, in order to achieve an accurate measurement, it is necessary to increase amount of the liquid sample to increase the number of processed particles. However, in this case, measurement time should be remarkably increased.

If the flow rate of the sample is increased in order to shorten the measurement time, count missing in the particle image processing is increased due to the dead time. For this reason the number of image-processed particles belonging to the kind, whose concentration is low, is further decreased.

Conventionally, a measuring system in which magnification factor of microscope images is small and imaging field of view of the TV camera is large, has been used. However, in such a system, magnification factor switching function of an optical unit and light intensity regulation are required and light intensity in the neighborhood of the image can be insufficient, which gives rise to problems such as decrease in resolving power of particle images, low particle identifying ability, etc.

Red blood corpuscules vs. white blood corpuscules in blood, urinary casts vs. red and white blood corpuscules in sedimented component of urine, etc. can be cited as examples of the sample, in which concentration ratios differ significantly from each other so that such a problem takes place.

### SUMMARY OF THE INVENTION

The object of the present invention is to provide a particle image analysis method and apparatus suitable for improving an accuracy in particle classification.

According to the present invention, a liquid sample containing particles is made flow through a flow cell; the particles passing through the flow cell are detected; the particles thus detected are measured by illuminating the particles passing through a predetermined measurement position in the flow cell by measurement light when the detected particles pass through the measurement position; and an image thus picked up is analyzed to carry out classification of the particles passing therethrough. A characteristic features of the present invention are that in such a particle image analysis particle measurement of a liquid sample is carried out by switching over measurement mode at least to a first and a second measurement mode depending on the particles to be measured.

The particles which can not be accurately measured by the first measurement mode can be accurately measured by the second measurement mode and in this way it is possible to solve the problems concerning measurement accuracy. For example, in the first measurement mode suitable for low concentration particle measurement, low concentration particles are measured under such a condition that amount of the liquid sample is increased, while at the second measurement mode suitable for high concentration particle measurement, high concentration particles are measured under such a condition that amount of the liquid sample is decreased. In this way it is possible to measure both low concentration particles and high concentration particles without lowering accuracy. Further, for example, a particular kind of particles, which are probably uncounted in the first measurement mode suitable for measuring all the kinds of particles, are measured in the second measurement mode suitable for measuring the particular kind of particles, then the count missing problem is solved. Therefore all the kinds of particles can be measured with high accuracy.

### BRIEF DESCRIPTION OF THE DRAWINGS

Fig. 1 is a block diagram showing a whole construction of a particle image analysis apparatus, which is an embodiment of the present invention;
Fig. 2 is a perspective view of a flow cell in Fig. 1;
Figs. 3A to 3D are diagrams for explaining variations in width and thickness of a liquid sample when the measurement mode is switched over; and
Fig. 4 is a block diagram of a section for analyzing number of particles in Fig. 1.

### DESCRIPTION OF THE PREFERRED EMBODIMENTS

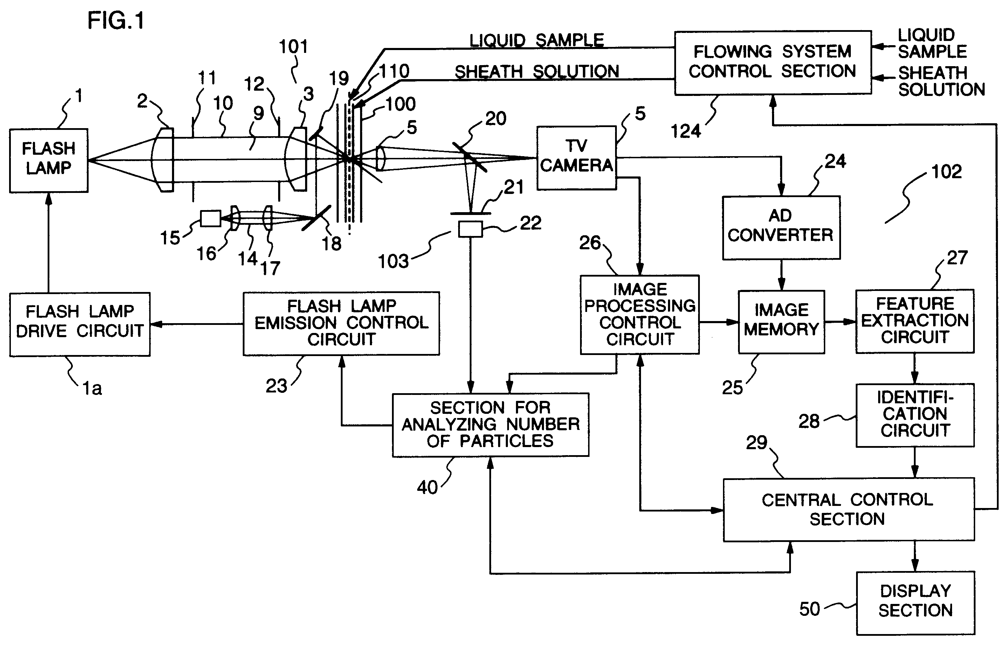

An embodiment of the present invention will be explained below, referring to Fig. 1 to Figs. 3A to 3D.

Fig. 1 shows schematically a whole construction of a flow type particle image analysis apparatus, which is an embodiment of the present invention.

In Fig. 1 this flow type particle image analysis apparatus consists of a flow cell 100, an image pickup section 101, a particle analysis section 102, a particle detection section 103, and a flow system control section 124.

The image pickup section 101 includes a flash lamp drive circuit 1a, a flash lamp 1, a field lens 2, a visual field diaphragm 11, an aperture diaphragm 12, a microscope condenser lens 3, a microscope object lens 5 (used in common by the particle detection section 103), and a TV camera 8. The particle analysis section 102 has an A/D converter 24, an image memory 25, an image processing control circuit 26, a feature extraction circuit 27, an identification circuit 28, a section for analyzing number of particles 40, and a central control section 29.

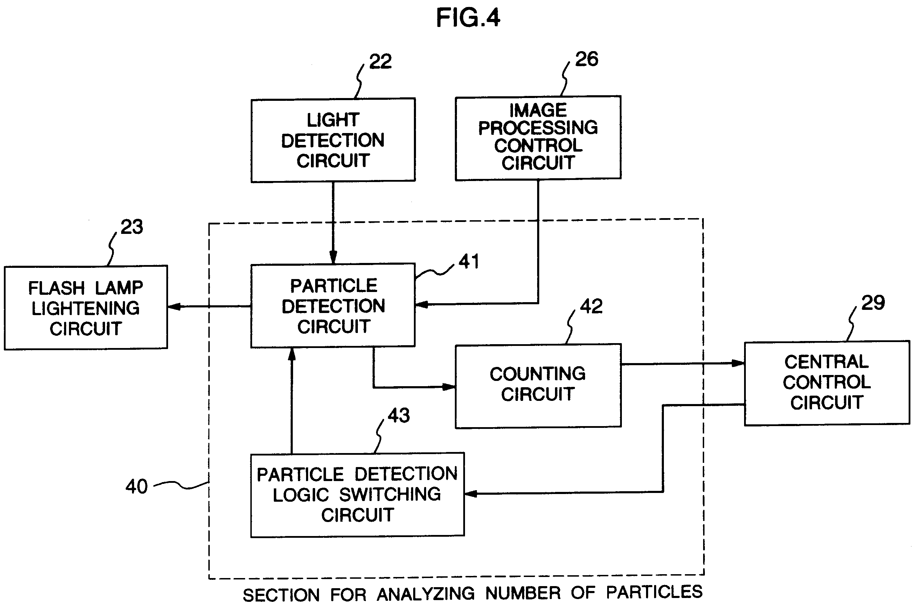

Further, as indicated in Fig. 4, the section for analyzing number of particles 40 consists of a particle detection circuit 41, a counting circuit 42, and a particle detection logic circuit 43.

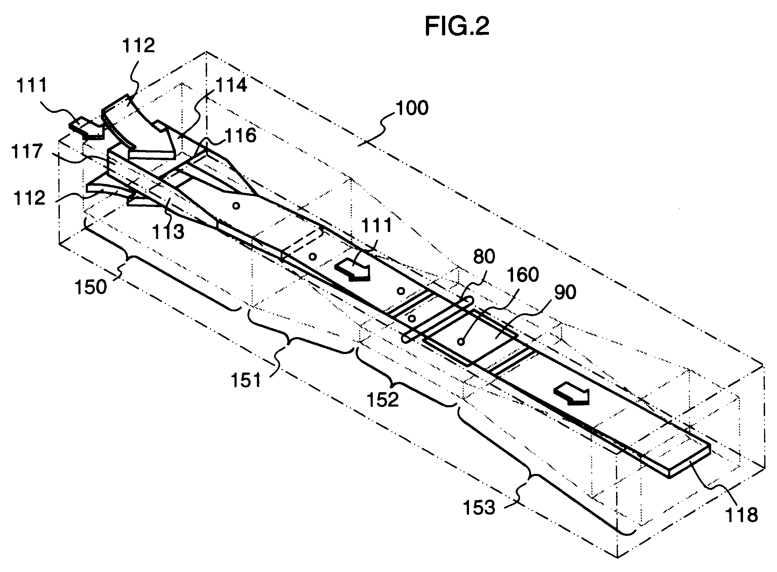

As indicated in Fig. 2, the flow cell 100 consists of a parallel flow path portion 150, a stream restriction flow path portion 151, a measurement flow path portion 152, and a speed reducing flow path portion 153. The flow cell 100 is usually made of glass.

The parallel flow path portion 150 extends from an inlet 117 to a junction portion with the stream restriction flow path portion 151. The cross-section thereof perpendicular to the flow direction of the liquid sample 111 is quadrilateral and a nozzle 114 is disposed in the neighborhood of the inlet 117 of the parallel flow path portion 150.

The cross-sectional shape of this nozzle 114 is a rectangle, whose shorter side is in the thickness direction, which is almost identical to the pass direction of flash light described later and whose longer side is in the width direction, which is perpendicular both to the thickness direction and to the flow direction of the liquid sample. The intersection of the two diagonals of this rectangle is in accordance with the intersection of the two diagonals of the cross-sectional quadrilateral of the inlet 117 of the parallel flow path portion 150 and the rectangle is within the quadrilateral. The interior of this nozzle 114 constitutes the flow path of the liquid sample 111 and the exterior thereof is the flow path of the sheath solution 112.

The cross-section of the nozzle 114 remains approximately at the same rectangular shape till the nozzle outlet 116 along the flow direction of the liquid sample 111. A sample guides 113 is mounted on the nozzle outlet 116 for maintaining the size of the flow of the liquid sample 111 in the width direction constant. This sample guide 113 consists of a pair of plate-shaped members, which are opposite to each other, putting the flow of the liquid sample 111 therebetween, and extends from the nozzle output 116 to a middle portion of the parallel flow path portion 150.

The stream restriction flow path portion 151 extends from the junction portion with the parallel flow path portion 150 to the junction portion with the measurement flow path portion 152 and has a quadrilateral cross-section, the size of which remains unchanged in the width direction and decreases gradually towards the measurement flow path portion 152 in the thickness direction.

The measurement flow path portion 152 extends from the junction portion with the stream restricting flow path portion 151 to the junction portion with the speed reducing flow path portion 153 and has a constant quadrilateral cross-section, in the middle portion of which there are disposed a particle detection region 80 and an image pickup region 90.

The particle detection region 80 has an elongated shape extending in the width direction and having a length approximately equal to the width of the flow of the liquid sample. The image pickup region 90 is disposed on the downstream side of the particle detection region 80 and has a square shape, a side of which is approximately equal to the width of the flow of the liquid sample.

The speed reducing flow path portion 153 extends from the junction portion with the measurement flow path portion 152 to an outlet 118 and has a quadrilateral cross-section, the size of which remains unchanged in the width direction and increases gradually along the flow direction of the liquid sample in the thickness direction.

Now flow state of the liquid sample 111, in which particles are suspended, and the sheath solution 112 in the flow cell 100 will be explained.

The liquid sample 111 containing the suspended particles and the sheath solution 112 flow at an inlet S1 into the parallel flow path portion 150. In the parallel flow path portion 150, since the liquid sample and the sheath solution flow therein according to the shape of the nozzle 114, a two-layered stream is formed, in which the liquid sample constitutes an inner layer, while the sheath solution forms an outer layer (covering layer).

The guide 113 of this nozzle 114 suppresses disturbance of the liquid sample at the nozzle outlet 116. In this way it is possible to keep the width of the liquid sample almost at the width of the guide 113 from the nozzle outlet 116 to the outlet 118. When the ratio in the flow rate between the liquid sample and the sheath solution is varied, the width of the liquid sample is kept constant and only the thickness is varied owing to the guide 113.

When the liquids flow into the stream restriction flow path portion 151, the stream is restricted only in the thickness direction to form an ultra-flat sample flow approximately 200 to 300 µm wide and several µm to several tens of µm thick.

When this ultra-flat sample flow passes through the measurement flow path portion 152, the particles 160 in the liquid sample are detected by the particle detection region 80 and imaged by the image pickup region 90. Then the ultra-flat sample flow passes through the speed reducing flow path portion 153 to reach the outlet 118.

In the flow cell 100 the thickness of the ultra-flat sample flow in the measurement flow path portion 152 is adjusted, depending on the ratio in the flow rate between the liquid sample and the sheath solution. For example, in case where the flow rate of the ultra-flat sample flow is constant, when the flow rate of the sheath solution decreases, the width remains constant and the thickness of the ultra-flat sample flow increases and on the contrary if the flow rate of the sheath solution increases, the width remains constant and the thickness of the ultra-flat sample flow decreases.

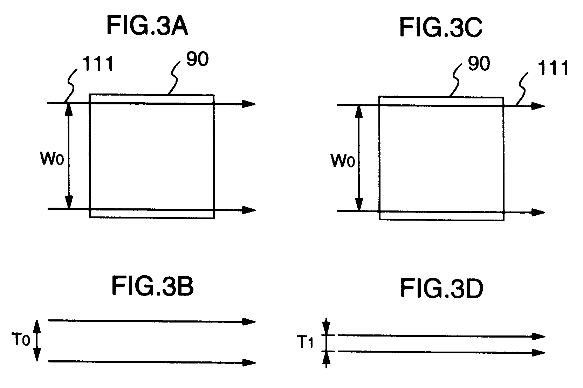

In case where particles, whose concentration in the liquid sample is low, are measured, it is preferable to increase volume of the liquid sample to be measured by increasing the the flow speed of the liquid sample. In case where the volume to be measured is in spite thereof insufficient, as indicated in Fig. 3B, measures can be taken by increasing the thickness of the flow of the liquid sample. On the contrary, in the measurement mode, by which particles, whose concentration is high, are to be measured, measures can be taken by decreasing the flow speed of the liquid sample and if necessary, by decreasing the thickness of the flow of the liquid sample, as indicated in Fig. 3D. In either of the measurement modes, the magnitude of the image pickup region is constant, as indicated in Figs. 3A and 3C. Even if the measurement mode is switched over, the width W0 remains unchanged and only the thickness is changed from T0 (state where the thickness is great) to T1 (state where the thickness is small) or from T1 to T0, as indicated in Figs. 3B and 3D.

The particle detection section 103 includes a semiconductor laser light source 15, a collimator lens 16, a cylindrical lens 17, a reflection mirror 18, a micro-reflection-mirror 19, a microscope object lens 5, a beam splitter 20, a diaphragm 21, a light detection circuit 22, and a flash lamp emission control circuit 23. Laser light emitted by the semiconductor laser source 15 is transformed into a parallel laser light beam 14 by the collimator lens 16 and this laser light beam 14 is focused only in one direction by the cylindrical lens 17. This focused laser light beam illuminates the particle detection region 80 in the flow cell 100 through the reflection mirror 18 by the micro-reflection-mirror 19 disposed between the microscope lens 3 and the flow cell 100.

The particle analysis section 102 converts image data signals outputted by the TV camera 8 into digital signals by means of an A/D converter 24 and stores data based thereon at predetermined addresses in the image memory 25 under control of the image processing control circuit 26. The data stored in the image memory 25 are read out under control of the image processing control circuit 26 and inputted to the feature extraction circuit 27 and the identification circuit 28 to be image-processed there. Results thus obtained are supplied to the central control section 29. It is particle classification results and particle identification feature parameter data used for particle classification that are supplied thereto. Classification identification processing of the particles is effected automatically by pattern recognition processing usually used. Image processing results thus obtained, measurement conditions and image information obtained by the image processing are sent from the central control section 29 to the section for analyzing the number of particles 40. In the section for analyzing the number of particles 40, particles are detected by the particle detection circuit 41 under particle detection signals from the central control section 29 and the light detection circuit 22 as well as a mode switching signal from the central control section 29 and subsequently the particles are counted by the counting circuit 42. Particles are detected by the particle detection circuit 41 according to a detection logic specified by the particle detection logic switching circuit 43 through electric signals from the light detection circuit 22. In the particle detection logic circuit 43, particle detection conditions are changed for each of the plurality of measurement modes by the central control section 29. Every time a particle is detected by the particle detection circuit 41, the content of the counting circuit 42 is increased by one and in this way at the end of the measurement it is possible to know the total number of the particles to be measured. Results thus obtained are sent to the central control section 29 and examined there on correspondence relation to the particle classification results obtained by the particle image processing. In this way final classification identification results are summarized. Results thus obtained are outputted to the display section 50 if necessary to be displayed. Further the particle detection signals of the particle detection circuit 41 are sent to the flash lamp lightening control circuit 23 to effect control of lightening the flash lamp or not and timing of the lightening.

The concentration of particles in the liquid sample and the number of particles converted for the field of view are calculated on the basis of these measurement results and analysis results are returned to the central control section 29.

The flow system control section 124 regulates the ratio in the flow rate between the liquid sample and the sheath solution flowing into the flow cell 100 according to signals from the central control section 29.

Next operation of a flow type particle image analysis apparatus, which is an embodiment of the present invention, will be explained.

In Fig. 1, the liquid sample and the sheath solution flow through the flow cell 100 downward in the figure. Laser light coming from the semiconductor laser light source 15 passes through the collimator lens 16 to form a laser light beam 14. This laser light beam 14 illuminates the flow cell 100 through the cylindrical lens 17, the reflection mirror 18 and the micro-reflection-mirror 19. Laser light, which has passed through the flow cell 100, is reflected by the beam splitter 20 through the microscope object lens 5 and detected by the light detection circuit 22 through the diaphragm 21.

When a particle in the liquid sample reaches a position, through which laser light passes, in the flow cell 100, a detection signal is sent from the light detection circuit 22 to the section for analyzing the number of particles 40. This detection signal is sent to the flash lamp emission control circuit 23 and the flash lamp 1 is lightened by the flash lamp drive circuit 1a under control of this circuit. Flash light from the flash lamp 1 passes through the lens 2 and illuminates the particle in the flow cell 100 through the visual field diaphragm 11, the aperture diaphragm 12 and the microscope condenser lens 3. An image of these illuminated particles is sent to the TV camera 8 through the microscope object lens 5. The image processing control circuit 26 supplies command signals to the image memory 25 and the section for analyzing the number of particles 40 according to information from the TV camera 8. In addition, image information obtained by the TV camera 8 is supplied to the image memory 25 through the A/D converter 24. The image information is sent from the image memory 25 to the central control section 29 through the feature extraction circuit 27 and the identification circuit 28.

The central control section 29 controls operation of the section for analyzing the number of particles 40, the image processing control circuit 26 and the flow system control section 124, and at the same time makes the display section 50 display an image-processed image. Further the central control section 29 supplies control signals to the flow system control section 124 to vary the ratio of the flow rate of the liquid sample to the flow rate of the sheath solution and the thickness of the liquid sample in the flow cell 100, the width thereof remaining constant.

Next the relation between the particle measurement mode and the particle detection logic will be described. There are a plurality of particle measurement modes. Here for the sake of simplicity, explanation will be made, supposing that there are only two modes. The first measurement mode aims at particles, whose existence ratio, i.e. concentration is low, while the second measurement mode aims at particles, whose existence ratio, i.e. concentration is high. At the second measurement mode, even if all the particles in the sample are an object to be measured, influences of the particles, whose existence ratio is low, are small.

Particle detection is carried out using a logic for particle detection in the first mode or one for the second mode depending on the measurement mode.

Particle size information is used for the particle detection logic. For obtaining the particle size information there are known two methods, by one of which a period of time required for a particle to pass through the particle detection system is used as an index, while by the other information of light scattered by the particle at irradiation with light is used. The magnitude of the period of time required for a particle to pass therethrough represents the particle size and the magnitude of scattering light also represents the particle size. Further there is a method, by which these two kinds of particle detection logics are used together.

In still another particle detection method, particle size is determined on the basis of the amplitude of fluorescence emitted from a particle. In another method, one-dimensional image sensor is implemented in a particle detection unit in order to obtain information of various shape of particles. Furthermore there is a method in which a dyeing solution is added to the liquid sample, then the passing particle is detected on the basis of color level thereof, wherein the color level is varied, depending on the size of the particle to be measured.

For instance, a case where sedimentation components of urine are analyzed will be described. In an analysis of sedimentation components of urine, particles having a large size, whose concentration is low, such as casts, are analyzed in the first measurement mode. In such a case, information of particle size is used for particle detection. In this case time required for a particle to pass through the particle detection unit or a amplitude of light scattering signals are measured. A threshold level of detection of the particle detection unit is set higher in the first measurement mode than in the second measurement mode. Since the concentration of particles is low, the flow speed and the thickness of the liquid sample are increased to increase amount of the liquid sample in the flow. In this way counted particles are increased then reproducibility of the measurement is improved. In the second measurement mode particle components other than casts, which have smaller sizes but higher concentration, are treated. For particle detection it is suitable to use particle size information and only particles of small size are detected. Since particles to be measured are red and white blood cells, concentration particle of is high thus satisfactory reproducibility can be obtained, even if the amount of the liquid sample is small. For this reason flow speed of the liquid sample can be low and thickness thereof can be small. The flow speed and the flow rate of the liquid sample are set under control of the flow control section 124. Even if the second measurement mode is used for measuring all kinds of passing particles in the liquid sample, since existence ratio of the other particles is small, they have no influences on the measurements, as described previously. Rather, in case where it is expected to detect at least one important particle, which is an object of the first measurement mode, it is preferable to consider all kinds of particles as object to be measured.

In case where red blood cells and white blood cells in blood are measured, there is a method, by which the blood cells are subjected to fluorescent dye and particle detection is carried out observing fluorescence from the blood cells. Fluorescent pigments such as acridine orange, make white blood cells emit fluorescence. On the contrary they make red blood cells emit almost no fluorescence. Speaking on the example, where sedimentation components in urine are analyzed, white blood cells may be treated in the first measurement mode, while red blood cells may be treated in the second measurement mode. Particle detection can be performed by detecting presence of a fluorescence signal. A period of time required for a white or red blood cell to pass through can be known by measuring light scattering signals. Since concentration of white blood cells in the liquid sample is very low, control of the flow rate, etc. of the liquid sample can be effected similarly to that described previously.

As described above, according to an embodiment of the present invention, in a flow type image analysis apparatus, in which a liquid sample, in which particles are suspended, is made flow through a flow cell, surrounded by a sheath solution, which is a cleaning solution; the liquid sample is irradiated with light to image particles contained therein by imaging means; an image thus picked up is subjected to image processing to effect classification of particles, since it comprises particle detection means disposed on the upstream side of an image pickup region, which determines particles to be measured at a plurality of measurement modes, and signals of a plurality of kinds of particles are distinguished, starting from particle detection signals thus obtained, to effect particle detection and image processing on a specified kind of particles distinguished in each of the measurement modes, particles in an image processed in each of the measurement modes are only the specified kind of particles previously determined.

Particles can be detected according to particle judgement logic, by which presence or absence of a particle fit to either one of a plurality of measurement modes is judged by applying different particle presence or absence judgement logics for different measurement modes to the particle detection means.

For example, particle detection can be effected by using particle size information. A period of time for a particle to pass through the particle detection system, or information of light scattered by the particle at irradiation with light can be used as the particle size information. Further, in another particle detection means, fluorescence information from the particle can be used.

Further, since in one of a plurality of measurement modes particles, whose concentration in the liquid sample is low, are to be measured, while in another measurement mode particles, whose concentration in the liquid sample is high, are to be measured, even if there exist a plurality of particles of significantly different concentrations, it is possible to detect particles of low concentration with a high efficiency to effect image processing. On the other hand, since particles of high concentration are processed by another particle detection logic, it is possible to know exactly a particle distribution state in the liquid sample.

For this reason, it is possible to maintain measurement precision in each of the measurement modes, independently from particle concentration, by increasing the amount of the liquid sample for the mode for measuring particles, whose concentration is low, or by decreasing the amount of the liquid sample for the mode for measuring particles, whose concentration is high.

Further, since the particle detection system can be so constructed that in one of a plurality of measurement modes a specified kind of particles in the liquid sample are to be measured, while in another measurement mode all the kinds of particles in the liquid sample are to be measured, in the mode, in which all the kinds of particles are to be measured, even if specified particles are contained in the treated particles, this can be reflected in measurement results. In particular, in case where concentration of the specified particles is low and in addition they are important particles, it is possible to reduce count missing of the important particles by having the particle detection system have a plurality of measurement modes.

As described above, in the above explanation, a case where a flow cell is used, which cell has a property that the width of the liquid sample is not varied significantly, depending on transportation condition of the liquid sample, has been described. In this case, as the result, it is possible to pick up images with a same imaging magnification factor of the particle image pickup means for the plurality of measurement modes. Consequently same image processing means and particle image identification means can be used even for the plurality of measurement modes.

In this case, since variations in the width of the liquid sample are small, even if the flow speed of the liquid sample and the thickness of the liquid sample in the optical axis direction at the image pickup position are changed by controlling the flow rate of the liquid sample and the cleaning solution, the volume of the liquid sample is varied significantly for different measurement modes without changing the image processing means.

Further, in this case, since the flow speed of the liquid sample varies together with variations in the ratio in the flow rate, the light beam generation control means requires means for regulating drive start of the light beam generation means, depending on the flow speed of the liquid sample.

According to the present embodiment, since it is unnecessary to adjust magnification factor of the lens and light intensity, every time the measurement mode is switched over, no ND filter is required and neither regulation of the aperture diaphragm, projection lens and gain of the TV camera nor shading correction circuit is necessary. Therefore the construction is simple and the price is lowered. In addition, regulation operation can be carried out in a short time. Further, since optical image magnification factor doesn't vary at switching over the mode, it is unnecessary to vary the image pickup area and it is possible to simplify control operation of the apparatus.

Although a case where a laser light beam from a semiconductor laser is used as detection light and laser light beam scattered by particles is utilized as particle detection means has been described, it is not restricted thereto but fluorescence from the particles or transmitted light can be used therefor. In addition, a method for detecting particles by means of a one-dimensional image sensor or a method for detecting particles by measuring variations in electric resistance due to passage of particles can be used.

Further, although according to the present embodiment a flow cell, in which the width of the liquid sample is constant, is used, the present invention can be applied also to a case where a flow cell, in which the width of the liquid sample gradually increases or decreases, is used.

Furthermore, although according to the present embodiment a case where a same image magnification factor is used for a plurality of measurement modes has been described, the present invention can be applied also to a case where the image magnification factor varies.

## Claims

1. A method of particle image analysis comprising the steps of:
flowing a liquid sample in which particles are suspending, in a flow cell (100);
detecting at least one of said particles passing a first predetermined position in said flow cell;
picking up, in response to said detection, an image of said detected particle by illuminating said detected particle passing a second predetermined position in said flow cell; and
analyzing said image to classify said detected particle;
wherein a mode for performing said steps are selected among at least first and second modes depending on said particle to be detected.

2. A method of particle image analysis according to claim 1, wherein said first and second mode are provided for performing said steps with respect to particles with different concentrations in said liquid sample.

3. A method of particle image analysis according to claim 1, wherein said first mode is provided for performing said steps with respect to substantially all particles included in said liquid sample, and said second mode is provided for performing said steps with respect to selected kinds of particles in said liquid sample.

4. A method of particle image analysis according to claim 1, wherein said flowing step flows said liquid sample so that coaxial double layers, along with the direction of sample flow which is substantially perpendicular to said illuminating light, including an inner layer of said liquid sample and an outer layer of a sheath solution, is formed in said flow cell.

5. A method of particle image analysis according to claim 4, wherein said flowing step controls the amount of said liquid sample and said sheath solution whereby the thickness of said sample flow layer and the flow rate of said sample flow layer is changed.

6. A method of particle image analysis according to claim 1, wherein the amount of said liquid sample in said flow cell in said first and second mode, are different form each other.

7. A method of particle image analysis according to claim 1, magnifications used in said picking up step are substantially same in said first and second modes.

8. A method of particle image analysis according to claim 1, said detecting step detects said particle on the basis of the observation of scattering light from said particle by illuminating said particle using a particle detection light source.

9. A method of particle image analysis according to claim 1, said detecting step detects said particle on the basis of the observation of fluorescence emitted from said particle by illuminating said particle using a particle detection light source.

10. An apparatus for particle image analysis comprising:
a flow cell (100);
a light source (1);
means (124) for flowing a liquid sample in which particles are suspending, in said flow cell;
means (103) for detecting at least one of said particles passing a first predetermined position in said flow cell;
means (5) for picking up, in response to said detection, an image of said detected particle by illuminating said detected particle passing a second predetermined position in said flow cell, by said light source; and
means (102) for analyzing said image to classify said detected particle;
means (29) for controlling said flowing, detecting, picking up and analyzing means in a mode selected among at least first and second modes depending on said particle to be detected.

11. An apparatus for particle image analysis according to claim 10, wherein said first and second mode are provided for controlling said flowing, detecting, picking up and analyzing means with respect to particles with different concentrations in said liquid sample.

12. An apparatus for particle image analysis according to claim 10, wherein said first mode is provided for controlling said flowing, detecting, picking up and analyzing means with respect to substantially all particles included in said liquid sample, and said second mode is provided for said flowing, detecting, picking up and analyzing means with respect to selected kinds of particles in said liquid sample.

13. An apparatus for particle image analysis according to claim 10, wherein said flowing means flows said liquid sample so that coaxial double layers, along with the direction of sample flow which is substantially perpendicular to said illuminating light, including an inner layer of said liquid sample and an outer layer of a sheath solution, is formed in said flow cell.

14. An apparatus for particle image analysis according to claim 13, wherein said flowing means controls the amount of said liquid sample and said sheath solution whereby the thickness of said sample flow layer and the flow rate of said sample flow layer is changed.

15. An apparatus for particle image analysis according to claim 10, wherein the amount of said liquid sample in said flow cell in said first and second mode, are different from each other.

16. An apparatus for particle image analysis according to claim 10, magnifications used by said picking up means are substantially same in said first and second modes.

17. An apparatus for particle image analysis according to claim 10, further comprising a particle detection light source wherein said detecting means detects said particle on the basis of the observation of scattering light from said particle by illuminating said particle using said particle detection light source.

18. An apparatus for particle image analysis according to claim 10, further comprising a particle detection light source wherein said detecting means detects said particle on the basis of the observation of fluorescence emitted from said particle by illuminating said particle using said particle detection light source.
